(19) Europäisches Patentamt
European Patent Office
Office européen des brevets

(11) Veröffentlichungsnummer: **0 256 540 B1**

(12) **EUROPÄISCHE PATENTSCHRIFT**

(45) Veröffentlichungstag der Patentschrift: **28.10.92**

(51) Int. Cl.$^5$: **C09D 175/00**, C08G 18/08

(21) Anmeldenummer: **87111840.2**

(22) Anmeldetag: **15.08.87**

# (54) Wässriges Überzugsmittel, Verfahren zu seiner Herstellung und dessen Verwendung.

(30) Priorität: **19.08.86 DE 3628125**

(43) Veröffentlichungstag der Anmeldung:
**24.02.88 Patentblatt 88/08**

(45) Bekanntmachung des Hinweises auf die Patenterteilung:
**28.10.92 Patentblatt 92/44**

(84) Benannte Vertragsstaaten:
**DE**

(56) Entgegenhaltungen:
**FR-A- 2 224 514**
**FR-A- 2 301 578**
**US-A- 4 507 426**

(73) Patentinhaber: **Herberts Gesellschaft mit beschränkter Haftung**
**Christbusch 25**
**W-5600 Wuppertal 2(DE)**

(72) Erfinder: **Göbel, Armin, Dipl.-Ing.**
**Osterroder-Strasse 27**
**W-5600 Wuppertal 2(DE)**
Erfinder: **Gräf, Knut, Chemie-Ing. grad.**
**In der Marpe 35**
**W-4321 Hattingen(DE)**
Erfinder: **Meier, Hans-Ulrich, Dr., Dipl.-Chem.**
**Hegel-Strasse 10**
**W-4300 Essen 18(DE)**
Erfinder: **Patzschke, Hans Peter, Dr., Chem.**
**Am Heckendorn 71**
**W-5600 Wuppertal 2(DE)**

(74) Vertreter: **Türk, Gille, Hrabal, Leifert**
**Brucknerstrasse 20**
**W-4000 Düsseldorf 13(DE)**

**EP 0 256 540 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wäßrige nichtvergilbende Überzugsmittel bzw. Beschichtungsmassen, die zum Beispiel für Decklacke brauchbar sind. Sie können als wasserverdünnbare Uni- oder Metallicbasecoats eingesetzt und üblicherweise mit einem wasserverdünnbaren oder in organischen Lösemitteln gelösten Klarlack überspritzt werden. Die Bindemittel sind als Industrielacke besonders z.B. in der Autoindustrie einsetzbar. Sie führen zur Überzügen, die neben einem guten optischen Effekt und ausgezeichneten mechanischen Eigenschaften störungsfrei durch elektrostatisches Verspritzen z.B. mit Hochrotations-Spritzgeräten aufgetragen werden können. Sie sind außerdem für Reparaturzwecke geeignete, da sie schon nach Härten bei niedrigen Temperaturen, wie 80° C, zu ausgezeichneten Eigenschaften führen.

Übliche wasserverdünnbare Polyacrylatharze haben eine vergleichsweise niedrige Molmasse und enthalten eine Reihe von hydrophilen Gruppen. Durch Zusatz von Neutralisationsmitteln entstehen Polycarbonsäuresalze, die in Wasser löslich oder mit Wasser verdünnbar sind. Diese Harze müssen mit Vernetzungsmitteln wie Melaminharzen und/oder blockierten Polyisocyanaten durch erhöhte Temperaturen vernetzt werden. Diese Reaktionen laufen unter 100° C so langsam, daß die Filme bei Feuchtigkeitsbeanspruchung Haftungsverluste zum Untergrund oder Blasen an der Oberfläche zeigen.

Harze mit höherer Molmasse werden durch Emulsionspolymerisation in wäßrigem Medium hergestellt. Durch den Zusatz von oberflächenaktiven Mitteln oder Emulgatoren entstehen Probleme in der Wasserbeständigkeit der Filme. Durch ihre leichte Koagulierbarkeit treten Schwierigkeiten bei der elektrostatischen Verspritzbarkeit auf.

In der DE-OS 28 60 661 werden wasserverdünnbare Bindemittelsysteme beschrieben, die Polymermikroteilchen enthalten, die in nicht-wäßrigen Lösemitteln und Wasser unslöslich sind. Sie werden mit Hilfe von polymeren sterischen Dispersionsstabilisatoren durch Polymerisation in nicht-wäßrigen Lösemitteln hergestellt und anschließend in das wäßrige Medium übergeführt. Diese Umwandlungsprozeß ist sehr aufwandig und störanfällig, weil durch Schwankungen im Herstellungsprozeß die Wirkung des Dispersionsstabilisators beeinträchtigt wird. In der EP-A-38127 werden diese Bindemittel zur Herstellung von Metallicbasecoats verwendet, wobei die Aluminium-Plättchen bzw. Pigmente mit Hilfe eines Melaminharzes in den Lack eingebracht werden.

In der DE-PS 27 36 542 werden Grundierungen für Metallspulen auf der Basis von Acrylatharz-Polyurethan-Dispersionen beschrieben. Spezielle Acrylatharze, die auf die Erfordernisse von Metallicbasecoats abgestimmt sind, werden nicht genannt. In der DE-OS 23 63 307 wird die Emulsionspolymerisation von Vinylmonomeren in Polyurethan-Dispersionen beschrieben. Bei den Vinylmonomeren kann es sich um Acrylatester handeln; der Einsatz von freie Carboxylgruppen enthaltenden Vinylmonomeren wird nicht genannt. Ein Hinweis auf spezielle Erfordernisse für Metallicbasecoats ist auch hier nicht zu entnehmen. Die bei der Emulsionspolymerisation erhaltenen Produkte mit hoher Molmasse werdn als modifizierte Polyurethankautschuke verwendet.

In der DE-OS 32 10 051 werden wasserverdünnbare Polyurethan-Dispersionen zur Herstellung von Metallicbasecoats verwendet. Sie ergeben im allgemeinen zu weiche Filme, so daß sie mit Melaminharzen vernetzt werden müssen. Dadurch wird es schwer, bei niedrigen Temperaturen, die für Reparaturen notwendig sind, noch geeignete wasserbeständige Filmeigenschaften zu bekommen. Die elektrostatische Verspritzbarkeit stößt ebenfalls auf Schwierigkeiten.

Es bestand daher die Aufgabe, ein weitgehend physikalisch trocknendes Bindemittelsystem bereitzustellen, das die vorstehenden Nachteile nicht aufweist.

Überraschenderweise wurde dieses Problem durch folgende Bindemittelkombination gelöst, die in dem erfindungsgemäßen Überzugsmittel enthalten ist, und ein Gemisch darstellt aus

A) 90 bis 40 Gew.-% hydroxylgruppenhaltigem Polymerisatharz mit
  - a) einer zahlenmittleren Molmasse von 10 000 bis 500 000,
  - b) einer Glasübergangstemperatur von -50 bis +150° C,
  - c) einer Säurezahl von 0 bis 80 (mgKOH pro g Festharz),
  - d) einer Hydroxylzahl von 60 bis 250 (mgKOH pro g Festharz) und
  - e) einer Viskosität von 5 bis 100 Pa•s,
  - f) das erhältlich ist durch radikalische Polymerisation von
    - f1) 0 bis 12 Gew.% $\alpha,\beta$-ungesättigten Carbonsäuren,
    - f2) 10 bis 65 Gew.% einpolymerisierbaren hydroxylgruppenhaltigen Monomeren,
    - f3) 0,1 bis 7 Gew.% polyungesättigten Monomeren und
    - f4) 16 bis 90 Gew.% monoungesättigten Monomeren, die außer einer Doppelbindung keine Weiteren reaktiven Gruppen enthalten; und

B) 10 bis 60 Gew.-% Polyurethandispersion

enthalten, wobei sich die Mengenanteile von A) und B) auf den Festkörperanteil von A) und B) beziehen und ihre Summe stets 100% beträgt, sowie Pigmente und gegebenenfalls übliche Lösemittel, Hilfs- und Zusatzstoffe.

Bevorzugt werden eingesetzt
80 bis 60 Gew.-% Komponente A) und
20 bis 40 Gew.-% Komponente B).
Die Komponenten A) und B) sind bevorzugt emulgatorfrei. Die Komponente B) ist vorzugsweise eine harnstoffgruppenhaltige Polyurethandispersion. Als Komponente A) oder B) können auch Gemische der entsprechenden Harztypen eingesetzt werden.

Bevorzugt weist die Komponente A), das Polymerisatharz, des erfindungsgemäßen Überzugsmittels eine zahlenmittlere Molmasse von 40 000 bis 200 000 auf. Die zahlenmittlere Molmasse wird durch Gelpermeationschromatographie bezogen auf Polystyrol gemessen. Die obere Grenze der Molmasse liegt bevorzugt bei 2 000 000, insbesondere bei 1 000 000. Es liegen bevorzugt praktisch keine wasserlöslichen Mikrogelteilchen vor. Die Glasübergangstemperatur liegt bevorzugt bei -15 bis +100°C und besonders bevorzugt bei +20 bis +50°C. Die Glasübergangstemperatur errechnet sich aus den Glasübergangstemperaturen der Homopolymerisate.

Die Säurezahl des als Komponente A) verwendeten Polymerisatharzes liegt bei 0 bis 80 (mgKOH pro g Festharz) und insbesondere bei 5 bis 50. Die Hydroxylzahl liegt bei 60 bis 250 (umgerechnet in mgKOH pro g Festharz), insbesondere bei 80 bis 200.

Die Viskosität der Komponente A) beträgt 5 bis 100 Pa•s, insbesondere 10 bis 50 Pa•s, gemessen in 50%iger Lösung in Butoxyethanol bei 25°C.

Durch die Erfindung wird ein physikalisch trocknendes Bindemittelsystem für wäßrige Überzugsmittel bereitgestellt, das bzw. die ohne Koagulationserscheinungen elektrostatisch verspritzbar sind, wozu beispielsweise Hochrotationsglocken eingesetzt werden können. Man erhält ausgezeichnete Überzüge. Es hat sich gezeigt, daß die erhaltenen Überzüge bei forcierter Trocknung bei Temperaturen in der Größenordnung von beispielsweise 80°C eine Lagerung in Wasser überstehen, ohne daß Oberflächenstörungen und Haftungsverluste auftreten. Außerdem eignen sich die eingesetzten Polymerisatharze bzw. Polyacrylatharze hervorragend als Anreibebindemittel für Pigmente. Man erhält sowohl mit organischen als auch mit anorganischen Pigmenten Pasten mit hoher Transparenz und großer Farbtiefe. Die Pasten weisen eine gute Lagerstabilität auf. Auf diese Weise können sowohl Metallic-Basislacke als auch Uni-Lacke hergestellt werden,in denen das Anreibebindemittel zu einem integrierten Bestandteil der Grundlackformulierung wird. Dies stellt einen großen Vorteil gegenüber Dispersionen und Emulsionen dar, die sich unter anderem wegen mangelnder Scherstabilität nicht als Anreibeharz eignen (bei der Dispergierung auf Sand- oder Perlmühlen treten hohe Scherkräfte auf). In derartigen Fällen mußte bisher eigens für die Herstellung von getönten Metallic-Lacken oder Uni-Lacken auf spezielle Anreibebindemittel zurückgegriffen werden,die das Eigenschaftsbild der Lacke minderten. Die beim Anreiben mit dem erfindungsgemäß eingesetzten Polyacrylatharz erhaltenen Tönpasten eignen sich hervorragend zum An- und Beitönen von Metallic-Lacken.

Die erfindungsgemäß als Komponente A) eingesetzten Polymerisatharze sind bevorzugt Poly(meth)-acrylatharze. Sie können ohne Verwendung von Emulgatoren, Dispersionsstabilisatoren und/oder Schutzkolloiden mit Hilfe radikalischer Katalysatoren in mit Wasser verdünnbaren organischen Lösungsmittel bei Temperaturen von 50 bis 160°C hergestellt werden. Es ist wesentlich, daß eine für eine Lösungspolymerisation hohe mittlere Molmasse, wie vorstehend angegeben, erreicht wird, wie es sich auch in der hohen Viskosität der Lösung zu erkennen gibt.

Eine Steigerung der Viskosität erzielt man bei Lösungspolymerisaten üblicherweise durch Reduktion der Katalysatormenge, wobei durch den hohen Lösemittelgehalt und der in den Monomeren vorhandenen Stabilisatoren die Polymerisationsausbeute unvollständig wird. Eine bessere Lösung findet sich in der Kombination von höherem Katalysatorgehalt mit Zusatz von polyungesättigten Monomeren. An ihrer Stelle können auch Monomere mit reaktiven Gruppen eingebaut werden, die während der Polymerisation untereinander reagieren , wodurch das polyungesättigte Monomere "in situ" entsteht. Durch Auswahl geeigneter Säure-und Hydroxylzahlen werden soviel hydrophile Gruppen in das Molekül eingeführt, daß es nach Neutralisation mit basischen Verbindungen mit Wasser auf einen Festkörper von 15 bis 45 Gew.-% verdünnt werden kann. Bei Einsatz eines Acrylatharzes mit einer niedrigen Säurezahl ist eine hohe Hydroxylzahl anzuwenden und umgekehrt. So kann beispielsweise mit einer Säurezahl von 20 und einer Hydroxylzahl von 150 ein wasserverdünnbares Produkt hergestellt werden.

Die Zusammensetzung des Poly(meth)acrylharzes (Komponente A) ist erhältlich aus

a) 0 bis 12 Gew.-%, insbesondere 1 bis 10 Gew.-% $\alpha,\beta$-ungesättigten Carbonsäuren,
b) 10 bis 65 Gew.-%, insbesondere 15 bis 50 Gew.-% einpolymerisierbaren, hydroxylgruppenhaltigen Monomeren, insbesondere ethylenisch mono-ungesättig-

| | |
|---|---|
| | ten,hydroxylgruppenhaltigen Monomeren, |
| c) 0,1 bis 7 Gew.-%, | insbesondere 0,5 bis 5 Gew.-% besonders bevorzugt 1,0 bis 3 Gew.-% polyungesättigten Monomeren, insbesondere ethylenisch polyungesättigten Monomeren und |
| d) 16 bis 90 Gew.-%, | insbesondere 35 bis 85 Gew.-% ungesättigten, insbesondere ethylenisch ungesättigten Monomeren, die außer der ungesättigten Bindung keine weiteren reaktiven Gruppen tragen. |

Als ethylenisch ungesättigte Monomere kommen praktisch alle radikalisch polymerisierbaren Monomeren in Frage, wobei jedoch die üblichen Einschränkungen für Copolymerisationen gelten, die durch das Q- und e-Schema nach Alfrey und Price, bzw. die Copolymerisationsparameter vorgegeben sind ( vgl. z.B. Brandrup und Immergut, Polymer Handbook, 2nd ed. John Wiley & Sons, New York (1975) ).

Als $\alpha,\beta$-ungesättigte Carbonsäuren werden Monomere der allgemeinen Formel

$$R\text{-}CH=CR'\text{-}COOH$$

eingesetzt, worin

R = -H, -COOH, $-C_nH_{2n+1}$ oder $-COOC_nH_{2n+1}$
R' = -H, oder $-C_nH_{2n+1'}$
n = 1 bis 6

bedeuten.

Beispiele hierfür sind Acrylsäure, Methacrylsäure, Crotonsäure, Fumarsäure, Maleinsäure-monoalkylester, Itaconsäure-monoalkylester. Bevorzugt sind Acrylsäure und Methacrylsäure.

Unter einpolymerisierbaren, hydroxylgruppenhaltigen Monomeren werden solche verstanden, die außer einer polymerisierbaren ethylenisch ungesättigten Gruppe noch mindestens eine Hydroxylgruppe an einem $C_2$ bis $C_{20}$ Kohlenstoffgerüst enthalten. Es sind hauptsächlich ungesättigte Veresterungsprodukte der allgemeinen Formel

$$R''\text{-}CH=CR'\text{-}X\text{-}R'''$$

worin zu den oben angegebenen Bedeutungen noch R'' = -R' oder $-COOC_nH_{2n+1}$, R''' = eine lineare oder verzweigte $C_{1\text{-}6}$-Alkylgruppe mit 1 bis 3 OH-Gruppen, und X = -COO-, -CONH-, $-CH_2O$- oder -O- kommen. Besonders geeignet sind (Meth)acrylsäure-hydroxyalkylester wie $\beta$-Hydroxyethylacrylat, $\beta$-Hydroxypropylmethyacrylat, Butandiol-1,4-monoacrylat, Propylenglykolmonoacrylat, 2.3-Dihydroxypropylmethacrylat, Pentaerythrit-monomethacrylat, Polypropylenglykol-monoacrylat oder auch Fumarsäure-dihydroxyalkylester, deren lineare, verzweigte oder cyclische Alkylgruppe 2 bis 20 Kohlenstoffatome enthält. Es können jedoch auch N-Hydroxyalkyl(meth)acrylamide oder N-Hydroxyalkyl-fumarsäuremono- oder diamide, wie N-Hydroxyethyl-acrylamid oder N-(2-Hydroxypropyl)methacrylamid eingesetzt werden. Besonders elastische Eigenschaften sind beim Einsatz eines Reaktionsprodukts von Hydroxyalkyl-(meth)acrylat mit $\epsilon$-Caprolacton zu erhalten. Andere hydroxylgruppenhaltige Verbindungen sind Allylalkohol, Monovinylether von Polyolen, besonders Diolen, wie Monovinylether des Ethylenglykols und Butandiols, sowie hydroxylgruppenhaltige Allylether oder -ester wie 2.3-Dihydroxypropyl-monoallylether. Trimethylolpropan-monoallylether oder 2.3-Dihydroxypropansäure-allylester. Besonders geeignet sind Hydroxyalkyl(meth)acrylate, z.B. Hydroxyethyl-(meth)acrylat.

Die Hydroxylgruppen können auch dadurch eingebaut werden, daß carboxylgruppenhaltige Copolymerisate mit Alkylenoxiden, wie Ethylenoxid, Propylenoxid, Butylenoxid,umgesetzt werden.

Unter ethylenisch polyungesättigten Monomeren werden Verbindungen mit mindestens 2 radikalisch polymerisierbaren Doppelbindungen nach der allgemeinen Formel $R\text{-}CH=CR'\text{-}B\text{-}(\text{-}CR'=CH\text{-}R)_m$, m = 1 bis 3, bevorzugt ist m = 1, verstanden, wobei außer den weiter oben angegebenen Bedeutungen B das allgemeine, tragende chemische Grundgerüst für die reaktive Doppelbindung ist. Beispiele für B sind der o-,m- oder p-Phenylrest und Reste der Formel -X-Alkyl-X'-, worin Alkyl bevorzugt 2 bis 18 C-Atome aufweisen, X und X' gleiche oder verschiedene verbindende Gruppen, z.B. -O-, -CONH-, -COO-, -NHCOO- oder -NH-CO-NH sind. B kann z.B. ein Benzolring wie im Divinylbenzol sein, der gegebenenfalls auch substituert sein kann wie p-Methyldivinylbenzol oder o-Nonyldivinylbenol.

Andere geeignete polyungesättigte Monomere sind Reaktionsprodukte aus Polyalkoholen, besonders Dialkoholen, mit $\alpha,\beta$-ungesättigten Carbonsäuren, wie sie schon definiert sind. Beispiele hierfür sind Ethandiol-diacrylat, Ethylenglykoldimethacrylat, 1.4-Butandiol-diacrylat, 1.6-Hexandiol-diacrylat, Neopentylglykol-dimethacrylat, Triethylenglykol-dimethacrylat, Polyglykol-400-diacrylat, Glycerin-dimethacrylat, Trimethylolpropan-triacrylat und/oder Pentaerythrit-diacrylat. Urethan- und amidgruppenhaltige polyfunktionelle Monomere werden hergestellt durch Reaktion von beispielsweise Hexandiisocyanat oder Methacrylsäure-$\beta$-isocyanatoethylester mit Hydroxyethyl(meth)acrylat oder (Meth)acrylsäure. Beispiele für anders aufgebaute geeignete Verbindungen sind Allylmethacrylat, Diallylphthalat, Butandioldivinylether, Divinylethylenharnstoff, Divinylpropylenharnstoff, Maleinsäurediallylester, Bis-maleinimide, Glyoxabisacrylamid und/oder das Reaktionsprodukt von Epoxidharz mit (Meth)acrylsäure oder Fumarsäurehalbestern. Bevorzugt wird der Einsatz von difunktionellen ungesättigten Monomeren wie Butandiol-diacrylat oder Hexandiol-diacrylat. Bei Verwendung von Glycidyl-methacrylat und Methacrylsäure entsteht das entsprechende Glycerindimethacrylat automatisch bei der Polymerisation. Die Art und Menge an polyungesättigten Monomeren ist mit den Reaktionsbedingungen (Katalysatoren, Reaktionstemperatur, Lösemittel) sorgfältig abzustimmen, um die gewünschte hohe Viskosität ohne Gelierungen zu erhalten.

Die Auswahl der ungesättigten Monomeren, die keine weiteren reaktiven Gruppen enthalten, erfolgt nach den mechanischen und Verträglichkeitseigenschaften. Es werden Acrylsäure-alkylester, Methacrylsäure-alkylester und/oder Maleinsäure-oder Furmarsäure-dialkylester eingesetzt, wobei die Alkylreste aus 1 bis 20 Kohlenstoffatomen bestehen und in linearer oder verzweiger aliphatischer Kette und/oder als cycloaliphatischer und/oder (alkyl)aromatischer Rest angeordnet sind. "Harte" Monomere mit einer hohen Glasübergangstemperatur als Polymeres sind beispielsweise Monomere vom Vinyl-o-, m- oder p-Aromaten-Typ wie Styrol, $\alpha$-substituierte Styrole wie $\alpha$-Methylstyrol, p-, m- oder p-Alkylstyrole wie Vinyltoluol oder p-tert.-Butylstyrol , halogenierte Vinylbenzole wie o- oder p-Chlorstyrol, Methacrylsäureester mit kurzer Kette wie Methylmethacrylat, Ethylmethacrylat, Propylmethacrylat, Butylmethacrylat, Cyclohexylmethacrylat, Isobornylmethacrylat, Dihydrodicyclopentadienylmethacrylat, (Meth)acrylamid und/oder (Meth)-acrylnitril. "Weiche" Monomere sind dagegen Acrylsäureester mit einer langen Alkoholkette wie n-Butylacrylat, Isobutylacrylat, tert.-Butylactylat und/oder 2-Ethylhexylacrylat. Es können auch ungesättigte Ether wie Ethoxyethylmethacrylat oder Tetrahydrofurfuryl-acrylat eingesetzt werden. Monomere vom Vinylester-Typ, vorzugsweise Vinylester können bei Einhaltung geeigneter Reaktionsbedingungen anteilweise auch verwendet werden. Bevorzugte Monomerkombinationen sind beispielsweise Acrylat-und/oder Methacrylat-Monomere, (Meth)acrylsäure, Hydroxy-alkyl(meth)acrylsäureester als mono-olefinisch ungesättigte Verbindungen und Divinylbenzol, Butandiol-diacrylat oder Hexandiol-diacrylat als mehrfach ungesättigte Verbindungen.

Die Copolymerisation erfolgt in bekannter Weise durch Lösungspolymerisation unter Zusatz von radikalischen Initiatoren, sowie gegebenenfalls Molekulargewichtsreglern. Sie erfolgt in einer Flüssigkeit, die für das Monomere ein Lösemittel ist und das gebildete Polymer im Lösungszustand hält. Der Gehalt an Monomeren, bzw. Polymeren beträgt dabei etwa 30 bis 70 Gew.-%. Es wird eine Lösungspolymerisation in organischen Lösemitteln bevorzugt, die mit Wasser verdünnbar sind. Solche Lösemittel sind beispielsweise Ethylenglykol, Ethoxyethanol, Butoxyethanol, Diethylenglykol, Triethylenglykol, Diethylenglykol-dimethylether, Propylenglykol, Ethoxypropanol, Methoxypropanol, Dipropylenglykol-monomethylether, Dipropylenglykoldimethylether, Diacetonalkohol, Ethanol, Isopropanl, n-Butanol, sek.-Butanol, tert.-Butanol, Aceton, Methoxypropan, Dioxan, Tetrahydrofuran, N-Methylpyrrolidon oder ihren Gemischen. Zur Verlaufsverbesserung kann auch anteilweise ein nicht-wasserlösliches, hochsiedendes Lösemittel zugesetzt werden wie Hexylenglykol, Phenoxyethanol oder 2.2.4-Trimethylpentandiol-1.3-monoisobutyrat. Im allgemeinen wird das Lösemittel bzw. Lösemittelgemisch bis zur Reaktionstemperatur erwärmt und dann das Monomerengemisch über mehrere Stunden zulaufen gelassen. Um bei Rückflußtemperatur arbeiten zu können, wird der Initiator auf die Siedetemperatur des Lösemittelgemisches abgestimmt. Er zerfällt dabei üblicherweise mit einer Halbwertzeit von 30 Minuten bis zu 10 Stunden. Der Initiator wird entweder im Monomerengemisch kalt gelöst oder aus Sicherheitsgründen während des Zulaufs getrennt zudosiert. Als Katalysatoren , die in organischen Lösemitteln löslich sind, werden 0.1 bis 5 Gew.-%, bevorzugt 0.5 bis 3 Gew.-% bezogen auf die eingesetzte Monomeren-Menge an Peroxiden und/oder Azoverbindungen zugesetzt. Als Peroxide werden beispielsweise verwendet Benzoylperoxid oder Di-tert.-butylperoxid, Hydroperoxide wie tert.-Butylhydroperoxid oder Cumolhydroperoxid, und Perester wie tert.-Butylperoctoat oder tert.-Butylperbenzoat. Thermisch zerfallende Azoverbindungen sind beispielsweise 2.2'-Azo-bis-(2-cyanopropan),1.1'-Azo-bis-cyclohexancarbonitril oder 4.4'-Azo-bis-(4-cyanopentansäure). Durch den Einsatz von Reglern kann das Molekulargewicht in bekannter Weise herabgesetzt werden. Bevorzugt werden hierzu Mercaptane, halogenhaltige Verbindungen und andere radikalübertragende Substanzen eingesetzt. Besonders bevorzugt sind n-oder tert.-Dodecylmercaptan, Tetrakismercaptoacetylpentaerythrit, tert.-Butyl-o-thiokresol, Thiosalicylsäure, Mercaptoessigsäure, Buten-1-ol oder dimeres $\alpha$-Methylstyrol.

Um das emulgatorfreie Poly(meth)acrylatharz in eine wäßrige Lösung bzw. Dispersion überzuführen, werden die Carboxylgruppen neutralisiert und anschließend mit Wasser verdünnt. Als Neutralisationsmittel eignen sich Ammoniak, primäre, sekundäre und tertiäre Alkyl- oder Alkanol-amine, sowie Aminoether oder auch quaternäre Ammoniumhydroxide. Beispiele hierfür sind Diethylamin, Triethylamin, Propylamin, Butylamin, Dimethylaminoethanol, Diisopropanolamin, Triethanolamin, Triisopropanolamin, 2-Amino-2-methyl-1-propanol, 2-Dimethylamino-2-methylpropanol-1, Morpholin oder Methyl-morpholin. Die Auswahl des Amin-Neutralisationsmittels beeinflußt die Stabilität der wäßrigen Dispersion und muß dementsprechend geprüft werden. Aufgrund ihrer leichten Flüchtigkeit werden Ammoniak, Triethylamin, Dimethylaminoethanol und N-Methyl-Morpholin bevorzugt. Die obere Grenze der zugesertzten Aminmenge ergibt sich aus dem 100%igen Neutralisationsgrad der vorhandenen Carboxylgruppen. Die untere Grenze ist durch die Stabilität der hergestellten Dispersion bedingt. Der pH-Wert des neutralisierten Überzügsmittels soll etwa 6.5 bis 8.5 betragen. Liegt der pH-Wert zu niedrig, so treten Dispergierschwierigkeiten auf - das Harz fällt aus. Niedrig siedende Lösemittel können gegebenenfalls nach Neutralisation und Verdünnen mit Wasser durch Destillation unter Normaldruck oder im Vakuum entfernt werden.

Als Komponente B) wird eine Polyurethandispersion verwendet. Diese ist bevorzugt anionisch und hat bevorzugt, bezogen auf ihren Festkörper, eine Säurezahl von 5 bis 50, besonders bevorzugt 10 bis 30. Die Herstellung dieser Dispersion erfolgt üblicherweise durch Kettenverlängerung eines Präpolymeren mit endständigen Isocyanatgruppen, nach Neutralisation seiner Säuregruppen durch Emulgieren in Wasser mit Polyaminen und/oder Hydrazin. Hierbei werden entweder alle Isocyanatgruppen mit Diaminen umgesetzt oder es bleiben bei Verwendung von höheren Polyaminen oder entsprechenden Gemischen Aminstickstoffatome mit reaktionsfähigem Wasserstoff übrig. Es werden bevorzugt harnstoffgruppenhaltige Polyurethandispersion hergestellt. Mit Hilfe dieses Verfahren entstehen Produkte mit verbesserter Dispergierbarkeit, d.h. die entstehenden Polyurethane sind in Wasser mit verhältnismäßig wenig sauren Salzgruppen dispergierbar und bilden eine aus feinen Teilchen bestehende organische Phase.

Die Herstellung des isocyanatgruppenhaltigen Präpolymeren kann durch Reaktion von Polyalkoholen mit einer Hydroxylzahl von 10 bis 1800, bevorzugt 50 bis 500 mit überschüssigen Polyisocyanaten bei Temperaturen bis zu 150° C, bevorzugt 50 bis 130° C in organischem Lösemitteln, die nicht mit Isocyanaten reagieren können erfolgen. Das Äquivalenzverhältnis von NCO zu OH-Gruppen liegt zwischen 1.5 und 1.0 zu 1.0, bevorzugt zwischen 1.4 und 1.2 zu 1. Die zur Herstellung des Präpolymeren eingesetzten Polyole können niedrigmolekular und/oder hochmolekular sein, aber auch reaktionsträge anionische Gruppen enthalten.

Niedrigmolekulare Polyole ergeben ein härteres Polyurethan als höhermolekulare Polyole. Niedrigmolekulare Polyole haben ein Molekulargewicht von 60 bis zu etwa 400, und können aliphatische, alicyclische oder aromatische Gruppen enthalten. Es werden dabei Mengen bis zu 30 Gew.-% der gesamten Polyol-Bestandteile, bevorzugt etwa 2 bis 20 Gew.-% eingesetzt. Vorteilhaft sind die niedermolekularen Polyole mit bis zu etwa 20 Kohlenstoffatomen je Molekül wie Ethylenglykol, Diethylenglykol, Triethylenglykol, 1,2-Propandiol, 1.3-Propandiol, 1.4-Butandiol, 1,2-Butylenglykol, 1.6-Hexandiol, Trimethylolpropan, Ricinusöl oder hydriertes Ricinusöl , Di-trimethylolpropanether, Pentaerythrit, 1.2 Cyclohexandiol, 1.4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A und deren Mischungen.

Um ein NCO-Präpolymeres hoher Flexibilität zu erhalten, sollte ein hoher Anteil eines höhermolekularen, linearen Polyols mit einer bevorzugten Hydroxylzahl von 30 bis 150 zugesetzt werden. Bis zu 97 Gew.-% des gesamten Polyols können aus gesättigten und ungesättigten Polyestern und/oder Polyethern mit einer Molmasse $\overline{M}n$ von 400 bis 5000 bestehen. Als hochmolekulare Polyole sind geeignet aliphatische Polyetherdiole der allgemeinen Formel

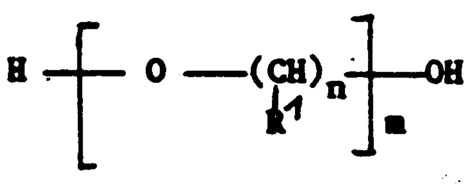

in der $R^1$ = Wasserstoff oder ein niedriger , gegebenenfalls mit verschiedenen Substituenten versehener Alkylrest ist, wobei n = 2 bis 6, bevorzugt 3 bis 4 und m = 2 bis 100, bevorzugt 5 bis 50 ist. Beispiele sind lineare oder verzweigte Polyetherdiole wie Poly-(oxyethylen)glykole, Poly(oxypropylen)glykole und/oder Poly(oxybutylen)glykole. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im Molmassenbereich $\overline{M}n$ von 400 bis 3000.

Polyesterdiole werden durch Veresterung von organischen Dicarbonsäuren oder ihre Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäure mit

einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen wie Ethylenglykol, Propylenglykol, Butylenglykol, Butandiol-1.4, Hexandiol-1.6, Neopentylglykol und andere Diole wie Dimethylolcyclohexan. Es können jedoch auch kleine Mengen an Polyolen, wie Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure Azelainsäure, Sebazinsäure, Maleinsäure, Fumarsäure, Glutarsäure, Hexachlorheptandicarbonsäure, Tetrachlorphthalsäure und/oder Dimersisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen beispielsweise Trimellithsäureanhydrid oder das Addukt von Maleinsäureanhydrid an ungesättigte Fettsäuren anwesend sein.

Erfindungsgemäß werden auch Polyesterdiole eingesetzt, die durch Umsetzung eines Lactons mit einem Diol erhalten werden. Sie zeichnen sich durch die Gegenwart von endständigen Hydroxylgruppen und wiederkehrendenPolyesteranteilen der Formel

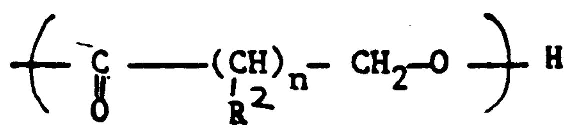

aus. Hierbei ist n bevorzugt 4 bis 6 und der Substituent $R^2$ Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure. Das als Ausgangsmaterial verwendete Lacton kann durch die folgende allgemeine Formel dargestellt werden

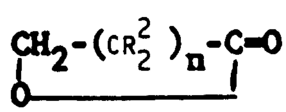

in der n und $R^2$ die bereits angegebene Bedeutung haben.

Für die Herstellung der Polyesterdiole wird das unsubstituierte ε-Caprolacton, bei dem n den Wert 4 hat und alle R-Substituenten Wasserstoff sind, bevorzugt. Die Umsetzung mit Lacton wird durch niedermolekulare Polyole wie Ethylenglykol, 1.3-Propandiol, 1.4-Butandiol, Dimethylolcyclohexan gestartet. Es können jedoch auch andere Reaktionskomponenten wie Ethylendiamin, Alkyldialkanolamine oder auch Harnstoff mit Caprolacton umgesetzt werden.

Als höhermolekulare Diole eignen sich auch Polylactamdiole, die durch Reaktion von beispielsweise ε-Caprolactam mit niedermolekularen Diolen hergestellt werden.

Als typische multifunktionelle Isocyanate eignen sich aliphatische, cycloaliphatische und/oder aromatische Polyisocyanate mit mindestens zwei Isocyanatgruppen pro Molekül. Bevorzugt werden die Isomeren oder Isomerengemische von organischen Diisocyanaten. Als aromatische Diisocyanate eignen sich Phenylendiisocyanat, Toluylendiisocyanat, Xylylendiisocyanat, Biphenylendiisocyanat, Naphthylendiisocyanat und Diphenylmethandiisocyanat.

Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat, sowie die Hydrierungsprodukte der aromatischen Diisocyanate wie Cyclohexylendiisocyanat, Methylcyclohexylendiisocyanat, und Dicyclohexylmethandiisocyanat. Aliphatische Diisocyanate sind Verbindungen der Formel

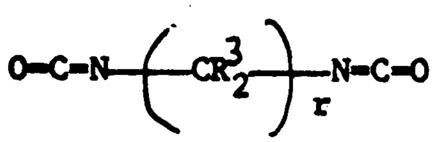

worin r eine ganze Zahl von 2 bis 20, insbesondere 6 bis 8 ist und $R^3$, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexyl-methandiisocyanat. Die zur Bildung des Präpolymeren gebrauchte Polyisocyanat-Komponente kann auch einen Anteil höherwertiger Polyisocyanate enthalten, vorausgesetzt sie wird nicht durch Gelbildungen beeinträchtigt. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Polyurethane sind im allgemeinen nicht mit Wasser verträglich, wenn nicht bei ihrer Synthese spezielle Bestandteile eingebaut und/oder besondere Herstellungsschritte vorgenommen werden. So wird in die Komponente B) eine so große Säurezahl eingebaut, daß das neutralisierte Produkt stabil in Wasser zu emulgieren ist. Hierzu dienen Verbindungen, die zwei mit Isocyanatgruppen reagierende H-aktive Gruppen und mindestens eine zur Anionenbildung befähigte Gruppe enthalten. Geeignete mit Isocyanatgruppen reagierende Gruppen sind insbesondere Hydroxylgruppen, sowie primäre und/oder sekundäre Aminogruppen. Gruppen, die zur Anionenbildung befähigt sind, sind Carboxyl-, Sulfonsäure und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den Hydroxylgruppen des Moleküls reagieren. Es werden dazu beispielsweise Alkansäuren mit zwei Substituenten am $\alpha$-ständigen Kohlenstoffatom eingesetzt. Der Substituent kann eine Hydroxylgruppe, eine Alkylgruppe oder bevorzugt eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Beispiele für solche Verbindungen sind Dihydroxypropionsäure, Dihydroxybernsteinsäure und Dihydroxybenzoesäure. Eine besonders bevorzugte Gruppe von Dihydroxyalkansäuren sind die $\alpha,\alpha$-Dimethylolalkansäuren, die durch die Strukturformel

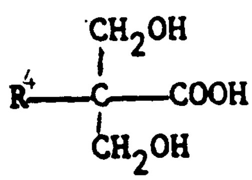

gekennzeichnet sind, worin $R^4$ = Wasserstoff oder eine Alkylgruppe mit bis zu etwa 20 Kohlenstoffatomen bedeutet. Beispiele für solche Verbindungen sind 2.2-Dimethylolessigsäure, 2.2-Dimethylolpropionsäure, 2.2-Dimethylolbuttersäure und 2.2-Dimethylolpentansäure. Die bevorzugte Dihydroxyalkansäure ist 2.2-Dimethylolpropionsäure. Aminogruppenhaltige Verbindungen sind beispielsweise $\alpha,\delta$-Diaminovaleriansäure, 3.4-Diaminobenzoesäure, 2.4-Diaminotoluolsulfonsäure und 2.4-Diamino-diphenylethersulfonsäure. Das Carboxylgruppen enthaltende Polyol kann 3 bis 100 Gew.-%, vorzugsweise 5 bis 50 Gew.-% des gesamten Polyolbestandteiles im NCO-Präpolymeren ausmachen.

Diese Dihydroxyalkansäure wird vor der Umsetzung mit Isocyanaten mindestens anteilweise mit einem tertiären Amin neutralisiert, um eine Reaktion mit den Isocyanaten zu vermeiden.

Die durch die Carboxylgruppen-Neutralisation in Salzform verfügbare Menge an ionisierbaren Carboxylgruppen

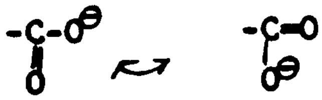

beträgt im allgemeinen wenigstens 0.4 Gew.-%, vorzugsweise wenigstens 0.7 Gew.-% bezogen auf den Feststoff. Die obere Grenze beträgt etwa 6 Gew.-%. Die Menge an Dihydroxyalkansäuren im unneutralisierten Präpolymeren ergibt eine Säurezahl von wenigstens 5, vorzugsweise wenigstens 10. Die obere Grenze der Säurezahl liegt bei 60, vorzugsweise bei 40 bezogen auf Feststoff.

Die erfindungsgemäß verwendeten NCO-Präpolymere können durch gleichzeitige Umsetzung des Polyols oder Polyolgemisches mit einem Diisocyanat-Überschuß hergestellt werden. Andererseits kann die Umsetzung auch in vorgeschriebener Reihenfolge stufenweise vorgenommen werden.

Beispiele sind in den DE 26 24 442 und DE 32 10 051 beschrieben. Die Reaktionstemperatur beträgt bis zu 150 ° C, wobei eine Temperatur im Bereich von 50 bis 130 ° C bevorzugt wird. Die Umsetzung wird fortgesetzt, bis praktisch alle Hydroxylfunktionen umgesetzt sind.

Das NCO-Präpolymer enthält wenigstens etwa 0.5 Gew.-% Isocyanatgruppen, vorzugsweise wenigstens 1 Gew.-% NCO bezogen auf Feststoff. Die obere Grenze liegt bei etwa 15 Gew.-%, vorzugsweise 10 Gew.-%, besonders bevorzugt bei 5 Gew.-%.

Die Umsetzung kann gegebenenfalls in Gegenwart eines Katalysators wie Organozinnverbindungen und/oder tertiären Aminen durchgeführt werden. Um die Reaktionsteilnehmer in flüssigem Zustand zu halten und eine bessere Temperaturkontrolle während der Reaktion zu ermöglichen, ist der Zusatz von organischen Lösemitteln, die keinen aktiven Wasserstoff nach Zerewitinoff enthalten, möglich. Verwendbare Lösemittel sind beispielsweise Dimethylformamid, Ester, Ether wie Diethylenglykol-dimethylether, Ketoester, Ketone wie Methylethylketon und Aceton, mit Methoxygruppen substituierte Ketone wie Methoxy-hexanon, Glykoletherester, chlorierte Kohlenwasserstoffe, aliphatische und alicyclische Kohlenwasserstoffpyrrolidone wie N-Methylpyrrolidon, hydrierte Furane, aromatische Kohlenwasserstoffe und deren Gemische. Die Menge an Lösemittel kann in weiten Grenzen variieren und sollte zur Bildung einer Präpolymer-Lösung mit geeigneter Viskosität ausreichen. Meistens genügen 0.01 bis 15 Gew.-% Lösemittel, vorzugsweise 0.02 bis 8 Gew.-% Lösemittel bezogen auf den Festkörper. Sieden die gegebenenfalls nicht wasserlöslichen Lösemittel niedriger als das Wasser, so können sie nach der Herstellung der harnstoffhaltigen Polyurethan-Dispersion durch Vakuumdestillation oder Dünnschichtverdampfung schonend abdestilliert werden. Höhersiedende Lösemittel sollten weitgehend wasserlöslich sein und verbleiben in der wäßrigen Polyurethan-Dispersion, um das Zusammenfließen der Polymer-Teilchen während der Filmbildung zu erleichtern. Besonders bevorzugt wird als Lösemittel N-Methylpyrrolidon, gegebenenfalls im Gemisch mit Ketonen,wie Methyl-ethyl-keton.

Die anionischen Gruppen des NCO-Präpolymeren werden mit einem tertiären Amin mindestens teilweise neutralisiert. Die dadurch geschaffene Zunahme der Dispergierbarkeit in Wasser reicht für eine unendliche Verdünnbarkeit aus. Sie reicht auch aus, um das neutralisierte harnstoffgruppenhaltige Polyurethan beständig zu dispergieren. Geeignete tertiäre Amine sind beispielsweise Trimethylamin, Triethylamin, Dimethylanilin, Diethylanilin, N-Methylmorpholin. Das NCO-Präpolymer wird nach der Neutralisation mit Wasser verdünnt und ergibt dann eine feinteilige Dispersion. Kurz danach werden die noch vorhandenen Isocyanatgruppen mit Di- und/oder Polyaminen mit primären und/oder sekundären Aminogruppen als Kettenverlängerer umgesetzt. Diese Reaktion führt zu einer weiteren Verknüpfung und Erhöhung der Molmasse. Die Konkurrenzreaktion zwischen Amin und Wasser mit dem Isocyanat muß, um optimale Eigenschaften zu erhalten, gut abgestimmt (Zeit, Temperatur, Konzentration) und für eine reproduzierbare Produktion gut überwacht werden. Als Kettenverlängerer werden wasserlösliche Verbindungen bevorzugt, weil sie die Dispergierbarkeit des polymeren Endproduktes in Wasser erhöhen. Bevorzugt werden organische Diamine, weil sie in der Regel die höchste Molmasse aufbauen, ohne das Harz zu gelieren. Voraussetzung hierfür ist jedoch, daß das Verhältnis der Aminogruppen zu den Isocyanatgruppen zweckentsprechend gewählt wird. Die Menge des Kettenverlängerers wird von seiner Funktionalität, vom NCO-Gehalt des Präpolymeren und von der Dauer der Reaktion bestimmt. Das Verhältnis der reaktiven Aminogruppen im Kettenverlängerer zu den NCO-Gruppen im Präpolymeren sollte in der Regel geringer als 1:1 und vorzugsweise im Bereich von 1 :1 bis 0,75 : 1 liegen. Die Anwesenheit von überschüssigem aktiven Wasserstoff, insbesondere in Form von primären Aminogruppen, kann zu Polymeren mit unerwünscht niedriger Molmasse führen.

Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Ethylendiamin, Propylendiamin, 1.4-Butylendiamin, Piperazin, 1.4-Cyclohexyldimethylamin, Hexamethylendiamin-1.6, Trimethylhexamethylendiamin, Menthandiamin, Isophorondiamin, 4.4'-Diaminodicyclohexylmethan und Aminoethylethanolamin. Bevorzugte Diamine sind Alkyl- oder Cycloalkyldiamine wie Propylendiamin und 1-Amino-3-aminomethyl-3.5.5-trimethylcyclohexan.

Die Kettenverlängerung kann wenigstens teilweise mit einem Polyamin erfolgen, das mindestens drei Aminogruppen mit einem reaktionsfähigen Wasserstoff aufweist. Dieser Polyamin-Typ kann in einer solchen Menge eingesetzt werden, daß nach der Verlängerung des Polymers nicht umgesetzte Aminstickstoffatome mit 1 oder 2 reaktionsfähigen Wasserstoffatomen vorliegen. Solche brauchbaren Polyamine sind Diethylentriamin, Triethylentetraamin, Dipropylentriamin und Dibutylentriamin. Bevorzugte Polyamine sind Alkyl- oder Cycloalkyltriamine wie Diethylentriamin. Um ein Gelieren bei der Kettenverlängerung zu verhindern, können bei sehr hohem NCO-Gehalt auch kleine Anteile von Monaminen wie Ethylhexylamin zugesetzt werden.

Als Kettenverlängerer können auch Diamine verwendet werden, deren primäre Aminogruppe als Ketimin geschützt ist und die erst bei Anwesenheit von Wasser durch Abspaltung des Ketons reaktiv sind.

Die vorstehend definierten Komponenten A) und B) bilden die Bindemittel auf wäßriger Basis der erfindungsgemäßen Überzugsmittel. Die erfindungsgemäßen wäßrigen Überzugsmittel können durch Vermischen der Komponenten A) und B) erhalten werden. Die Komponente A) kann vor oder nach dem Vermischen neutralisiert werden. Das Neutralisieren ergibt eine ausreichende Wasserverdünnbarkeit. Zur Neutralisation können Ammoniak und/oder Amine (insbesondere Alkylamine ), Aminoalkohole und cyclische Amine, wie Di-und Triethylamin, Dimethylaminoethanolamin, Diisopropanolamin, Morpholin, N-Alkylmorpholine, eingesetzt werden. Die Verdünnung mit Wasser, um die gewünschte Viskosität zu erzielen, erfolgt je nach den zugesetzten Komponenten vor und/oder nach dem Vermischen der Komponenten A) und B).

Die erfindungsgemäßen wäßrigen Überzugsmitel werden bevorzugt farbig pigmentiert. Als Farbmittel können z.B. solche eingesetzt werden, wie sie in der deutschen Norm DIN 55944, Blatt 1-4 vom November 1973, beschrieben sind. Es sind auch handelsübliche Pigmentpräparationen geeignet. Die erfindungsgemäßen Überzugsmittel sind besonders geeignet zur Einarbeitung von Effektpigmenten, wie z.B. Metallpigmenten (z.B. Alubronzen) und/oder Perlglanzpigmenten und/oder Interferenzpigmenten, woraus hervorragende Effektlacke resultieren. Die Effektpigmente, wie die Metallpigmente bzw. Perlglanzpigmente können z.B. durch einfaches Vermischen in die wäßrigen Bindemittel eingearbeitet werden, gegebenenfalls durch anteilige Mitverwendung von Lösemitteln, Wasser, Dispergierhilfsmitteln und Verdickungsmitteln. Eine Vermahlung ist nicht nötig. Sollen farbige Metalleffekte oder Unifarbtöne erhalten werden, so ist ein vorheriges sorgfältiges Anreiben (Dispergieren) der jeweiligen Pigmente mit Anreibeharz, z.B. auf Perlmühlen notwendig. Verwendbare Anreibeharze sind z.B. wasserverdünnbare Polyesterharze, Amin-Formaldehyd-Kondensationsharze, wie Melaminharze und/oder Acrylatharze. Die Menge an zugesetztem Pastenharz sollte so klein wie möglich sein, jedoch können bei schlecht benetzbaren Pigmenten bis zu 20 Gew.-% des Bindemittels ersetzt werden. Ein günstiges Anreibeharz ist auch ein Mischpolymeres, das erhältich ist durch Umsetzung von

A) 80 bis 95 Gew.-% eines Copolymerisats aus

- a) 0.5 bis 40 Gew.-% N[N,N-Di-$C_{1bis4}$-alkylamino-$C_{1bis8}$-alkyl] (meth)acrylamide und/oder einem Gemisch von N,N-Di-$C_{1bis4}$-alkylamino-$C_{1bis8}$-alkyl(meth)acrylaten und N-substituierte (Meth)acrylamiden und/oder (Meth)acrylamid, wobei das Verhältnis der Amino(meth)acrylate zu den Amido(meth)-acrylaten 1:2 bis 2:1 sein soll,
- b) 10 bis 40 Gew.-% Hydroxi-$C_{2\text{-}8}$-alkyl(meth)acrylate,
- c) 20 bis 89.5 Gew.-% copolymerisierbare $\alpha,\beta$-olefinisch ungesättigte Verbindungen und

B) 5 bis 20 Gew.-% eines unverkappte und gegebenenfalls auch verkappte Isocyanatgruppen aufweisenden Polyisocyanats, das Biuret-, Urethan- oder Isocyanurat-Gruppen aufweist.

Seine Herstellung wird in der Patentanmeldung der gleichen Anmelderin mit der Bezeichnung "Pigmentdispersion und deren Verwendung" (DE-OS 36 28 123.9) mit dem gleichen Anmeldetage wie die vorliegende Anmeldung beschrieben.

Besonders geeignet und bevorzugt als Anreibeharz für Pigmente ist auch das Harz, wie es in der erfindungsgemäßen Komponente A) beschrieben wird. Falls das Harz der Komponente A) als Anreibeharz verwendet wird, können hierzu Teile der Komponente A)verwendet werden; es ist jedoch auch möglich, zusätzliche Mengen der Komponente A) als Anreibeharz einzusetzten. Die Verwendung der Komponente A) als Anreibeharz erfolgt bevorzugt nach Anneutralisieren und Anverdünnen mit Wasser. Es ist von besonderer Bedeutung, da hierdurch auf die Verwendung eines meist niedrigmolekularen Fremdbindemittels verzichtet werden kann, das möglicherweise die Eigenschaften der aus den erfindungsgemäßen Überzugsmitteln erhaltenen Lackfilme verfälschen könnte.

Weiterhin können den erfindungsgemäßen Überzugsmitteln übliche rheologische anorganische oder organische Additive zugesetzt werden. So wirken als Verdicker beispielsweise wasserlösliche Celluloseether wie Hydroxyethylcellulose, Methylcellulose oder Carboxymethylcellulose, wie synthetische Polymere mit ionischen und/oder assoziativ wirkenden Gruppen wie Polyvinylalkohol, Poly(meth)acrylamid, Poly(meth)-acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Polyurethane oder Polyacrylate. Besonders bevorzugt werden carboxylgruppenhaltige Polyacrylat-Copolymere mit einer Säurezahl von 60 bis 780, bevorzugt 200 bis 500, die auch zur Benetzung der Metalleffektpigmente verwendet werden können.

Lösemittel und Neutralisationsmittel, wie sie beispielsweise für die Poly(meth)acrylatharze vorstehend beschrieben werden, können zur Korrektur der rheologischen Eigenschaften sowie der pH-Werte und zur Verbesserung der Lagerbeständigkeit den erfindungsgemäßen Überzugsmitteln zugesetzt werden.

Die erfindungsgemäßen Überzugsmittel enthalten einen möglichst niedrigen Anteil an organischen Lösemitteln. Ihr Anteil liegt beispielsweise unter 15 Gew.-%.

Die erfindungsgemäßen Überzugsmittel weisen im allgemeinen einen Festkörpergehalt von etwa 10 bis 50 Gew.-% auf. Der Festkörpergehalt variiert mit dem Verwendungszweck des Überzugsmittels. Für Metalliclacke liegt er beispielsweise bevorzugt bei 10 bis 25 Gew.-%. Für unifarbige Lacke liegt erhöher, beispielsweise bei 15 bis 50 Gew.-%

Die erfindungsgemäßen wäßrigen Überzugsmittel können bereits bei niedrigen Temperaturen physikalisch getrocknet werden, gegebenenfalls unter Zusatz von Katalysatoren. Es können jedoch auch übliche Vernetzungsmittel zugesetzt werden, wie beispielsweise Formaldehydkondensationsprodukte, z.B. Melaminharze, und/oder blockierte Isocyanate. Die Härtung kann auch nach Beschichten mit einem üblichen Klarlack erfolgen, wobei vorgetrocknet oder bevorzugt naß in naß gearbeitet werden kann. Bei Verwendung von Zweikomponenten-Klarlacken (z.B. Acryl-Isocyanat und/oder Polyester-Isocyanat) werden bereits bei geringen Härtungstemperaturen besonders günstige Eigenschaften hinsichtlich Wasserfestigkeit, Steinschlagbeständigkeit, Haftung und Witterungsstabilität erzielt. Derartige Härtungstemperaturen liegen z.B. bei 80 bis 130 ° C. Mit einem Einkomponenten-Klarlack sind Temperaturen über 120 ° C bevorzugt.

Die Schichtdicken liegen bevorzugt bei 10 bis 30 µm Trockenfilmdicke für die Überzüge aus den erfindungsgemäßen Überzugsmitteln und bei 30 bis 60 µm bei zusätzlicher Verwendung eines Klarlakkes.Bevorzugt werden erfindungsgemäß "High-solids" als klare Decklacke verwendet. Die Beschichtung mit Klarlack ist nicht unbedingt erforderlich. Sie ist besonders günstig in der Kraftfahrzeugindustrie. Als wasserverdünnbarer Klarlack kann auch das Polymerisationsharz A) in Kombination mit geeigneten Vernetzungsmitteln verwendet werden.

Durch Einsatz nicht vorvernetzter Bindemittel wird mit den erfindungsgemäßen Überzugsmitteln ein guter Verlauf erzielt, was zu glatten Oberflächen führt. Darüber hinaus wird die Bronzeausrichtung bei Metallic-Lacken verbessert. Die Wasserfestigkeit der erzielten Überzüge ist ausgezeichnet. Bei Verwendung auf dem Kraftfahrzeugsektor erzielt man eine ausgezeichnete Steinschlagbeständigkeit.

Die erfindungsgemäßen wasserhaltigen und wasserverdünnbaren Überzüge weisen den Vorteil auf, daß sie nicht vergilben. Sie können sowohl als Basis- als auch als Decklacke verwendet werden. Bevorzugt ist dabei die Verwendung als Basislack, wobei diese Basislacke nach einer Vortrocknung mit einem klaren Decklack überlackiert werden können und beide Schichten dann gemeinsam getrocknet (eingebrannt) werden können. Als klare Decklacke können sowohl die bekannten üblichen lösungsmittelhaltigen Lacke, z.B. Einkomponenten- und ZweikomponentenKlarlacke (und hier besonders die Zweikomponenten-High-solid-Typen), als auch wasserverdünnbare Klarlacke eingesetzt werden. Mit den erfindungsgemäßen Überzugsmitteln wird auf den verschiedensten Untergründen eine gute Haftung erzielt. Gegenstand der Erfindung ist demgemäß auch die Verwendung der wäßrigen Überzugsmittel zur Herstellung eines Überzuges auf einem Substrat durch Auftrag auf die Oberfläche des Substrats, gegebenenfalls Überschichten mit einem in Wasser oder in organischen Lösemitteln gelösten Klarlack und Erwärmen auf Temperaturen von 60 bis 150 ° C. Substrate sind die üblichen mit Überzugsmitteln dieser Gattung beschichtete Gegenstände, insbesondere Kraftfahrzeugteile, die auch bereits mit einer Grundierung oder einem Füller beschichtet sein können.

Der Lackauftrag kann nach den üblichen in der Lackindustrie gebräuchlichen Methoden erfolgen, wie z.B. durch Spritzen, Rakeln, Tauchen, Walzen, wobei besonders die Möglichkeit des elektrostatischen Spritzens , wie eingangs erwähnt, auf sogenannten Hochrotationsglocken, zu nennen ist.

Herstellungsbeispiel 1

Hydroxylgruppenhaltiges Polymerisatharz A1

912 gButoxyethanol werden in einem Dreihalskolben unter Rückflußkühlung und Inertgas-Atmosphäre auf 130 °C erwärmt und dann mit Hilfe eines Tropftrichters innerhalb von 3 Stunden unter gutem Rühren ein Gemisch aus

| | |
|---|---|
| 60 g | Acrylsäure |
| 165 g | Hydroxyethylacrylat |
| 145 g | n-Butylacrylat |
| 60 g | Isobutylacrylat |
| 550 g | Methylmethacrylat |
| 20 g | Butandioldiacrylat |
| 6 g | tert.-Butyl-peroxy-2-ethylhexanoat |

unter Halten der Reaktionstemperatur von 130 °C langsam zugegeben. Es wird zweimal mit tert.-Butyl-peroxy-2-ethylhexanoat im Abstand von 2 Stunden nachinitiert und dann das Harz auspolymerisiert.

Endwerte:

Festkörper: 50.4 Gew.-%(30 min Erwärmen auf 180 °C)
Säurezahl : 48 mg KOH pro g Festharz
Viskosität: 21 Pa•s bei Festkörper
Ein Tyndall-Effekt des neutralisierten, mit Wasser auf 15% verdünnten Harzes unter Verwendung von unpolarisiertem monochromatischem Laserlicht verlief negativ.

Hydroxylgruppenhaltiges Polymerisatharz A2

Herstellung wie A1, jedoch bei 120 °C mit folgender Zusammensetzung

| | |
|---|---|
| 1927 g | Butoxyethanol |
| 92 g | Methacrylsäure |
| 331 g | Hydroxypropylacrylat |
| 462 g | Isobutylacrylat |
| 1134 g | Methylmethacrylat |
| 34 g | Hexandioldiacrylat |
| 14 g | tert.-Butyl-peroxy-2-ethoxyhexanoat. |

Endwerte:

Festkörper : 51.6 Gew.-% (30 min bei 180 °C)
Säurezahl : 29 mg KOH pro g Festharz
Viskosität : 29 Pa•s bei Festkörper
Tyndall-Effekt: negativ

Herstellungsbeispiel 2

Wäßrige Polyurethan-Dispersion B

In einem Reaktionsgefäß mit Rührer, Innenthermometer, Heizung und Rückflußkühler werden 250 g eines linearen Polyesters (aufgebaut aus Adipinsäure, Isophthalsäure, Hexandiol; OH-Zahl 77, Säurezahl 10) mit 80 g Methylethylketon und 53,3 g N-Methylpyrrolidon auf 70 °C erwärmt und bei dieser Temperatur 74 g hydriertes Bisphenol A sowie 28,3 g Dimethylolpropionsäure zugesetzt. Der Ansatz wird auf 120 °C erwärmt und eine halbe Stunde bei dieser Temperatur gerührt. Anschließend werden bei 70 °C 146,7 g Hexamethylendiisocyanat zugesetzt. Nach einer exothermen Phase (Temperatur <90 °C) wird der Ansatz so lange bei 75 °C gehalten, bis die Restisocyanatzahlwerte kleiner als 1,8 sind. Die warme Harzmischung wird in 891 g entionisiertes Wasser und 23,5 g Triethylamin unter starkem Rühren dispergiert. 5 min nach Ende der Harzzugabe werden 10,5 g Propylendiamin-1,3 in 75 g entionisiertes Wasser zugesetzt und der Ansatz

noch 1 Stunde gerührt.

Es resultierte eine durchscheinende wäßrige Dispersion mit folgenden Kenndaten:

| | |
|---|---|
| Feststoffgehalt | : 30 % |
| Viskosität (20 ° C) | : 109 mPa•s |
| pH-Wert | : 9,8 |
| Säurezahl | : 27 (mg KOH pro g Festharz) |

BEISPIEL 1

Herstellung eines Metallic-Basislackes

1000 g des in Herstellungsbeispiel 1 benannten Polyacrylatharzes A1 werden unter Rühren mit Ammoniak und Wasser in solchen Mengen versehen, daß ein Festkörper von 20% und ein pH-Wert von 7.3 resultiert. Diese Lösung wird 24 Stunden bei Raumtemperatur belassen und , wenn notwendig, mit Ammoniak auf pH 7,3 nachgestellt.

Parallel hierzu werden 40 g einer handelsüblichen Aluminiumbronze mit 65% Aluminiumbestandteil mit einem Gemisch aus 10 g Wasser und 14 Butoxyethanol angeteigt.

Zu 64 g der vorstehend beschriebenen Bronzeanteigung läßt man unter Rühren ( ca 800 U/min) ein Gemisch aus 434 g der vorstehend beschriebenen Polyacrylatharz-Lösung, 137 g vollentsalztes Wasser und 4 g Ammoniak über 15 min verteilt gleichmäßig zufließen. Anschließend wird weitere 15 min gerührt.

Anschließend werden 124g einer im Handel erhältlichen Polyurethandispersion mit 30% Festkörper und danach 237 g einer 3,4%igen handelsüblichen Verdickerlösung auf Basis einer Polyacrylatdispersion unter Rühren zugegeben und mit Ammoniak auf einen pH-Wert zwischen 7,3 und 7,5 eingestellt.

BEISPIEL 2

Lackaufbau in Metallic

Auf ein zinkphosphatiertes Karosserieblech, das mit einem Elektrotauchgrund und einem Füller lackiert wurde, werden mit einer Fließbecherpistole soviel des nach Beispiel 1 beschriebenen Metallic-Basislackes aufgebracht, daß nach dem Trocknen von 5 min bei 20 ° C und zusätzlich 5 min bei 80 ° C eine Trockenfilmstärke von etwa 15 µm verbleibt. Danach wird mit einem handelsüblichen Klarlack (z.B. Zweikomponentenlack,High-solid)überlackiert und 30 min bei 130 ° C eingebrannt. Die Trockenfilmstärke des Klarlackes beträgt ca. 40 µm. Die so erhaltene Lackoberfläche weist einen feinen gleichmäßigen hellen Metalleffekt auf. Der Lackfilm wird bis zum Füller mit einem feinen Messer mit dem sogenannten Leiterschnitt versehen und achtmal nach der sogenannten Klebebandabrißmethode getestet. Es wird kein Haftungsverlust vermerkt. Eine weitere , wie oben beschrieben, hergestellte Testplatte wird 120 Stunden in 40 ° C warmem Wasser gelagert. Nach einer Rekonditionierungsphase von 1 Stunde ist der Lackfilm frei von Blasen,ohne Kräuselung und ohne Vermattung.

BEISPIEL 3

Herstellung einer Tönpaste

Das in Herstellungsbeispiel 1 beschriebene Polyacrylatharz A2 wird mit Ammoniak und Wasser in solchem Maße versetzt, daß ein Festkörpergehalt von 38% und ein pH-Wert von 8.0 resultieren. 465 g dieser Harzlösung werden mit 155 g eines organischen Küpenfarbstoffs (Scharlach GO, transparent, der Firma Hoechst) und 380 g vollentsalztem Wasser 15 min im Dissolver bei 21 m/sec vordispergiert und anschließend 90 min auf einer Perlmühle bei Temperaturen um 60 ° C vermahlen. Diese Farbpaste weist eine hohe Transparenz auf und eignet sich hervorragend zum Tönen von wasserverdünnbaren Metallic-Basislacken.

BEISPIEL 4

Herstellung eines weißen Grundlackes

745 g des in Herstellungsbeispiel 1 beschriebenen Polyacrylathrazes A1 werden mit Ammoniak und Wasser in solchen Mengen versetzt, daß ein Festkörper von 37,2 Gew.-% und ein pH-Wert von 8,0 resultieren.

In 400 g dieser Polyacrylatharzlösung werden unter dem Dissolver 80 g Wasser, 20 g einer 50%igen Lösung eines symmetrischen Acetylenglykols in Butylglykol und 300 g Titandioxid eingearbeitet und 10 min bei 21 m/sec dispergiert. Nach dem Ruhen über Nacht wird diese Mischung 20 min bei Temperaturen um

40 °C auf einer Perlmühle dispergiert und auf 800 g Mahlgut bezogen mit weiteren 150 g der vorbeschriebenen 37,2%igen Polyacrylatharzlösung und 50 g Wasser versetzt. Des weiteren werden unter Rühren 400 g der im Herstellungsbeispiel 2 beschriebenen Polyurethandispersion B zugegeben und anschließend mit vollentsalztem Wasser auf eine Viskosität von 21 DIN-4-sec eingestellt.

Dieser weiße Basecoat wird mittels Fließbecherpistole auf ein mit einem Füller versehenes zinkphosphatiertes Normblech mit einer Trockenfilmstärke von etwa 30 µm aufgebracht und 5 min bei Raumtemperatur und 5 min bei 80 °C getrocknet. Anschließend wird mit einem lösungsmittelhaltigen Zweikomponenten-Klarlack (High-solid) überlackiert und 30 min bei 130 °C eingebrannt. Es resultiert ein rein weißer hochglänzender Lackfilm.

BEISPIEL 5
Herstellung eines Metallic-Basislackes

Die in Herstellungsbeispiel 2 benannte Polyurethandispersion B wird mit vollentsalztem Wasser auf einen Festkörper von 20% verdünnt. 450 g dieser 20%igen Dispersion werden mit 420 g der in Herstellungsbeispiel 1 benannten Polyacrylatharzlösung A1 unter Zugabe von 170 g vollentsalztem Wasser mit Ammoniak auf einen pH-Wert von 7.9 gestellt und mit weiteren 417 g vollentsalztem Wasser verdünnt.

40 g einer handelsüblichen Aluminiumbronze mit 65% Aluminiumbestandteil werden mit einem Gemisch aus 10 g vollentsalztem Wasser und 14 g Butoxyethanol angepastet.

Zu 64 g dieser Bronzepaste läßt man unter Rühren 620 g der vorstehenden Bindemittelmischung über 15 min verteilt gleichmäßig zufließen. Anschließend rührt man noch weitere 15 min bei etwa 800 U/min. Dann läßt man unter Rühren ein Gemisch aus 289 g vollentsaltztem Wasser und 27 g eines handelsüblichen Verdickers mit 30% Festkörper auf Basis einer Polyacrylatdispersion einfließen und rührt weitere 15 min. Dabei wird gegebenenfalls mit Ammoniak auf einen pH-Wert von 7,3 bis 7,6 nachgestellt und mit vollentsalztem Wasser auf eine Spritzviskosität von etwa 25 DIN-4-sec eingestellt. Dieser Metallic-Grundlack wird mit einer Fließbecherpistole auf eine Radkappe aus Polyamid so verspritzt. daß eine Trockenfilmstärke von etwa 15 µm resultiert. Nach Ablüften (etwa 5 min bei Raumtemperatur) und 5 min Trocknen bei 80 °C, wird nach Abkühlen mit einem konventionellen lösungsmittelhaltigen Klarlack (Zweikomponenten-High-solid) in einer Schichtstärke von etwa 40 µm Trockenfilm überlackiert und 45 min bei 80 °C getrocknet. Es resultiert ein hochglänzender Metalliceffektüberzug.

**Patentansprüche**

**1.** Wäßriges Überzugsmittel, enthaltend ein filmbildendes Material auf der Basis wasserverdünnbarer Bindemittel, die ein Gemisch aus
   A) 90 bis 40 Gew.% eines hydroxylgruppenhaltigen Polymerisatharzes mit
      a) einer zahlenmittleren Molmasse von 10000 bis 500000,
      b) einer Glasübergangstemperatur von -50 bis +150 °C,
      c) einer Säurezahl von 0 bis 80 (mgKOH pro g Festharz),
      d) einer Hydroxylzahl von 60 bis 250 (mgKOH pro g Festharz) und
      e) einer Viskosität von 5 bis 100 Pa•s (gemessen an einer 50% Lösung in Butoxyethanol bei 25 °C)
      f) das erhältlich ist durch radikalische Polymerisation von
         f1) 0 bis 12 Gew.% α,β-ungesättigten Carbonsäuren,
         f2) 10 bis 65 Gew.% einpolymerisierbaren hydroxylgruppenhaltigen Monomeren,
         f3) 0,1 bis 7 Gew.% polyungesättigten Monomeren und
         f4) 16 bis 90 Gew.% monoungesättigten Monomeren, die außer einer Doppelbindung keine weiteren reaktiven Gruppen enthalten; und
   B) 10 bis 60 Gew.% einer Polyurethandispersion enthalten, wobei sich die Mengenanteile von A) und B) auf deren Festkörperanteil beziehen und ihre Summe stets 100 % beträgt, sowie Pigmente und gegebenenfalls übliche Lösemittel, Hilfs- und Zusatzstoffe.

**2.** Verfahren zur Herstellung eines metallische und/oder nicht-metallische Effektpigmente enthaltenden Überzugsmittels nach Anspruch 1, dadurch gekennzeichnet, daß man die Komponenten A) und B) in den im Anspruch 1 angegebenen Mengenanteilen mit den metallischen und/oder nicht-metallischen Effektpigmenten und gegebenenfalls einem oder mehreren farbgebenden Pigmenten vermischt, wobei die farbgebenden Pigmente in einem Teil der Komponente A) oder einem anderen Anreibeharz angerieben sind.

3. Verfahren zur Herstellung eines farbpigmenthaltigen Überzugsmittels nach Anspruch 1, dadurch gekennzeichnet, daß man einen Teil der Komponente A) oder ein anderes Anreibeharz mit einem farbgebenden Pigment anreibt und in beliebiger Reihenfolge mit der Komponente A) bzw. dem Rest der Komponente A) und der Komponente B) oder einem Gemisch daraus, sowie gegebenenfalls einem oder mehreren metallischen oder nicht-metallischen Effektpigmenten vermischt, wobei die Mengenanteile der Komponente A) und B) gemäß Anspruch 1 eingehalten werden.

4. Verwendung der wäßrigen Überzugsmittel nach Anspruch 1 zur Herstellung eines Überzugs auf einem Substrat durch Auftrag auf die Oberfläche des Substrats, gegebenenfalls Überschichten mit einem in Wasser oder in organischen Lösungsmitteln gelösten Klarlack und Erwärmen auf Temperaturen von 60 bis 150°C.

**Claims**

1. An aqueous coating agent, containing a film-forming material based on water-dilutable binders that contain a mixture of
   A) 90 to 40 wt% of a hydroxyl-group-containing polymer resin with
      a) a number-average molecular weight of 10,000 to 500,000,
      b) a glass-transition temperature of -50 to +150 °C,
      c) an acid number of 0 to 80 (mg KOH per g solid resin),
      d) a hydroxyl number of 60 to 250 (mg KOH per g solid resin) and
      e) a viscosity of 5 to 100 Pa.s (measured on a 50 % solution in butoxyethanol at 25 °C)
      f) that is obtainable by radical polymerization of
         f1) 0 to 12 wt% $\alpha,\beta$-unsaturated carboxylic acids,
         f2) 10 to 65 wt% copolymerizable hydroxyl-group-containing monomers,
         f3) 0.1 to 7 wt% polyunsaturated monomers and
         f4) 16 to 90 wt% monounsaturated monomers that apart from a double bond contain no other reactive groups; and
   B) 10 to 60 wt% of a polyurethane dispersion, the quantitative proportions of A) and B) being related to their solids content and their sum always being 100 %, as well as pigments and optionally conventional solvents, auxiliary agents and additives.

2. A process for production of a coating agent according to Claim 1 containing metallic and/or non-metallic effect pigments, characterized in that the components A) and B) are mixed in the proportions indicated in Claim 1 with the metallic and/or non-metallic effect pigments and optionally one or several colouring pigments, the colouring pigments being milled in a part of component A) or another milling resin.

3. A process for production of a coating agent according to Claim 1 containing colouring pigment, characterized in that a part of component A) or another milling resin is milled with a colouring pigment and mixed in any sequence with component A) or the remainder of component A) and component B) or a mixture thereof, as well as optionally one or several metallic or non-metallic effect pigments, the proportions of components A) and B) according to Claim 1 being kept to.

4. The use of the aqueous coating agent according to Claim 1 for production of a coating on a substrate by application to the surface of the substrate, optionally covering with a layer of a clear coating dissolved in water or in organic solvents and heating to temperatures of 60 to 150°C.

**Revendications**

1. Produit de revêtement aqueux contenant une matière formant pellicule à base de liant diluable à l'eau, contenant un mélange de :
   A) 90 à 40 % en poids de résine polymère contenant des groupes hydroxyle obtenue avec
      a) une masse molaire moyenne en nombre de 10.000 à 500.000,
      b) une température de transition vitreuse de -50 à +150°C,
      c) un indice d'acide de 0 à 80 (mg de KOH par g de résine solide),
      d) un indice d'hydroxyle de 60 à 250 (mg de KOH par g de résine solide) et
      e) une viscosité de 5 à 100 Pa.s (mesurée dans une solution à 50 % dans le butoxyéthanol à

25 ° C)

f) que l'on obtient par polymérisation radicalaire de :

f1) 0 à 12 % en poids d'acides carboxyliques α,β-insaturés,

f2) 10 à 65 % en poids de monomères contenant des groupes hydroxyle que l'on peut introduire dans la polymérisation,

f3) de 0,1 à 7 % en poids de monomères polyinsaturés, et

f4) de 16 à 90 % en poids de monomères monoinsaturés, qui en-dehors d'une double liaison ne contiennent pas d'autres groupes réactifs ; et

B) de 10 à 60 % en poids d'une dispersion de polyuréthane, où les proportions quantitatives de A) et B) se rapportent aux solides et leur somme s'élève toujours à 100 %, ainsi que des pigments et éventuellement des solvants, adjuvants et additifs habituels.

**2.** Procédé de préparation d'un produit de revêtement contenant des pigments à effets spéciaux métalliques et/ou non métalliques selon la revendication 1, caractérisé en ce que l'on mélange les composants A) et B) dans les proportions quantitatives indiquées dans la revendication 1 avec les pigments à effets spéciaux métalliques et/ou non-métalliques et éventuellement un ou plusieurs pigments colorants, les pigments colorants étant broyés dans une partie du composant A) ou une autre résine de broyage.

**3.** Procédé de préparation d'un produit de revêtement contenant un pigment coloré selon la revendication 1, caractérisé en ce qu'on broie une partie du composant A) ou d'une autre résine de broyage avec un pigment colorant et en ce qu'on le mélange dans un ordre quelconque avec le composant A) ou le reste du composant A) et du composant B) ou un de leurs mélanges, ainsi qu'éventuellement un ou plusieurs pigments à effets spéciaux métalliques ou non-métalliques, les proportions quantitatives des composants A) et B) selon la revendication 1 étant maintenues.

**4.** Application du produit de revêtement aqueux selon la revendication 1 à la préparation d'un revêtement sur un substrat par dépôt à la surface du substrat, éventuellement recouvrement avec un vernis clair dissous dans l'eau ou dans des solvants organiques et chauffage à des températures allant de 60 à 150 ° C.